# EUROPEAN PATENT APPLICATION

(11) **EP 1 085 421 A2**
(43) Date of publication of application: **21.03.2001**
(21) Application number: 00118762.4
(22) Date of filing: 30.08.2000
(51) Int. Cl.: G06F 13/00

(54) **USB data monitoring apparatus**

(30) Priority: 31.08.1999 JP 24609799
(71) Applicant: ANDO ELECTRIC CO., LTD., Tokyo (JP)
(72) Inventor: Nagashima, Shigeru, c/o Ando Electric Co., Ltd., Tokyo (JP); Nagao, Takashi, c/o Ando Electric Co., Ltd., Tokyo (JP); Nagasato, Takao, c/o Ando Electric Co., Ltd., Tokyo (JP); Seki, Akira, c/o Ando Electric Co., Ltd., Tokyo (JP)
(74) Representative: Grünecker, Kinkeldey, Stockmair & Schwanhäusser Anwaltssozietät

(57) **Abstract**

In the USB data monitoring apparatus, when a SYNC data of the received data signal is SYNC pattern 80H, and the PID data is a data showing that it is a token packet, the ADDR/ENDP judgement circuit 13 judges whether the ADDR data and ENDP data of the received data signal coincide with the ADDR/ENDP data of the recording object which is set in the ADDR/ENDP setting table circuit. Then, only when the ADDR data and ENDP data of the received data signal coincide with the ADDR/ENDP data of the recording object, the data signal is recorded in the memory by the memory writing control section.

## Description

### BACKGROUND OF THE INVENTION

The present invention relates to a USB data monitoring apparatus to monitor the data of the universal serial bus (USB) which connects a personal computer to peripheral equipments thereof.

The universal serial bus (Universal Serial Bus; hereinafter, called USB) is a peripheral device specification which is developed to enhance the degree of freedom of the extendability of the peripheral devices, in personal computers, and the serial interface standard which can be used in common for the communication to various USB correspondent devices such as a key board, mouse, camera, printer, or modem.

This USB can connect, in principle, in one system, one host and up to the maximum 127 devices on the same bus. These connections are physically a bus of a star-type network structure, and logically, a client software of the host communicates to a device by 1 to 1. In order to realize such the physical and logical connection configuration, the lowest hierarchy protocol communicates in the time division, and the host conducts scheduling thereof.

The USB protocol stack software of the host takes the initiative in the data communication on the USB. Even when the data is transfered from the device side to the host, the host gives the address on the bus to the device, and gives the right of using of the bus, and then the device transfers the data to the host.

Further, the data communication on the USB is conducted in a unit which is called transaction. This transaction is structured by a unit which is called packet such as the token packet, data packet, and handshake packet, and initially, the transaction is surely started with the token packet which is issued when the host starts the transaction, and advances to the phases.

All of the above described packets including the token packet issued when the host starts the transaction, is started with the 8-bit SYNC (synchronization) field (fixed value of the 8-bit row "00000001"). The token packet is structured by 4 fields of a PID (packet ID) field, ADDR (Address) field, ENDP (End Point) field, and CRC5 field. The PID field distinguishes the packet, and is an identifier for showing the content of the operation request corresponding to each of packets, the ADDR field is a unique address which is allotted for each device by the host in one system, and the ENDP field is an end point, a plurality of which can be provided to one device.

As described above, the data communication on the USB is conducted in a transaction unit, and the transaction starts with the token packet. By the information of the address (hereinafter, called ADDR) and the end point (End Point; hereinafter, called ENDP) in the ADDR field and the ENDP field of the token packet, a device which is an object of the data communication, is specified, and the data communication is conducted. On the one hand, the ADDR/ENDP information is not included in the packet other than the token packet.

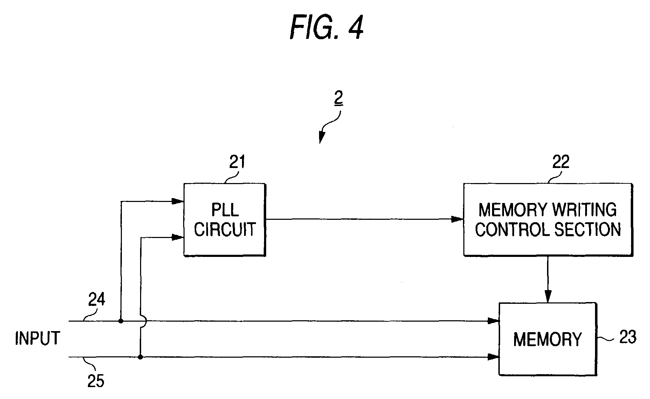

The USB data monitoring apparatus of the conventional technology, has the internal structure shown in Fig. 4, and the data on the USB is monitored.

In Fig. 4, the USB data monitoring apparatus 2 of the conventional technology is structured by: a phase-locked loop (PLL) circuit 21; memory writing control section 22; memory 23; and serial buses 24 and 25.

The serial buses 24 and 25 are a pair of twist pair wire for a pair of inputting data signals. In the USB, a pair of inputted data signals are basically processed as the differential signals, and therefore, a pair of twist pair wires are used as the bus for the data signals. The differential voltage polarity is switched corresponding to the connection of the FULL SPEED device, or LOW SPEED device.

The phase-locked loop (hereinafter, called PLL) circuit 21 detects the transition of the inputted data signal, and generates the data sampling clock. On the USB, the clock to conduct the sampling on the inputted data signal is not outputted. Alternatively, a synchronization pattern is added to the top of the data packet of each data signal. Accordingly, in the USB data monitoring apparatus, in order to monitor each data signal, the transition of the inputted data signal is detected, and the data sampling clock is generated corresponding to the transition.

In the order in which the data signal arrives at the memory 23, the memory writing control section 22 generates the memory address to record the information of all of the arrived data signals in the memory 23.

In the order in which the data signal arrives at the memory 23, the memory 23 records all of the arrived data signals according to the address generated by the memory writing control section 22. In this case, the information of all of the data signals arrived at the memory 23 is recorded in the memory 23, and the data signal to be recorded in the memory 23 according to a certain reference, is not selected.

As described above, on the USB of the conventional technology, because all of the data signals arrived at the memory 23 is recorded in the memory 23, and the data communication is conducted, when many devices are connected on the same bus, many ADDR and ENDP transactions mixedly exist, and the analysis of the data signal having the specific communication ADDR and ENDP data, becomes very difficult.

Further, on the USB, when the data traffic as an amount of the data communication of the data signal having the specific ADDR and ENDP which is an object of the analysis, is very low, and when the data traffic of the data signal having other ADDR and ENDP is high, the possibility that the data signal as the object of the analysis is slightly recorded in the memory, is also generated.

### SUMMARY OF THE INVENTION

Accordingly, an object of the present invention is to provide a USB data monitoring apparatus by which only the data signal which is the recording object, can be recorded in the memory, according to a specific ADDR and ENDP transaction.

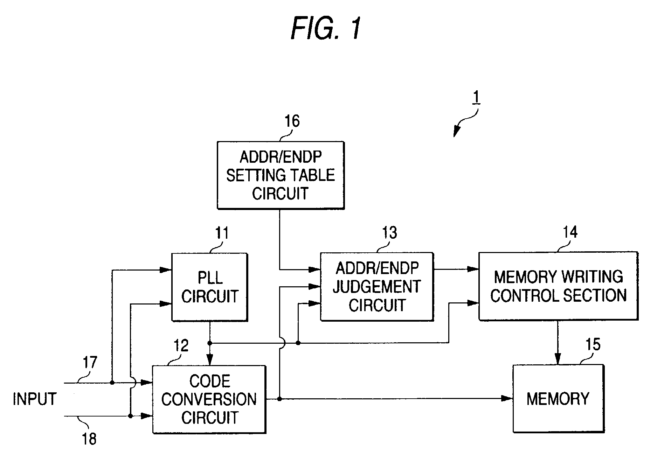

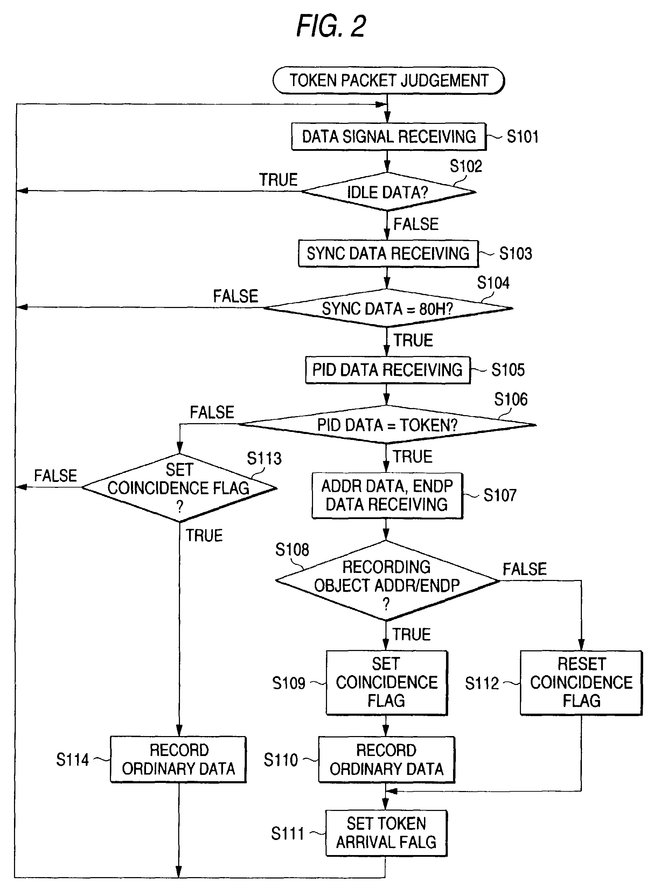

The invention of the first aspect is characterized in that: in the USB data monitoring apparatus to monitor the data of the universal serial bus (USB), the apparatus has a setting circuit (for example, an ADDR/ENDP setting table circuit 16 shown in Fig. 1) to set conditions of the recording object data, and a judgement circuit (for example, an ADDR/ENDP judgement circuit 13 shown in Fig. 1) to judge whether the data on the USB is the recording object data, according to the condition of the recording object data, which is set by the setting circuit; and according to the judgement result of the judgement circuit, only when the data is recording object data, the data is recorded in a memory (for example, a memory 15 shown in Fig. 1) (for example, Step S110 shown in Fig. 2).

According to the USB data monitoring apparatus 1 of the invention according to the first aspect, in the USB data monitoring apparatus to monitor the data of the universal serial bus (USB), the conditions of the recording object data are set by the setting circuit, and according to the conditions of the recording object data which are set by the setting circuit, it is judged whether the data on the USB is the recording object data, by the judgement circuit, and according to the judgement result of the judgement circuit, only when the data is the recording object data, the data is recorded in the memory.

The invention of the second aspect is characterized in that: in the USB data monitoring apparatus of the first aspect, the condition of the recording object data set by the setting circuit (for example, the ADDR/ENDP setting table circuit 16), includes an address (for example, ADDR) and the end point (for example, ENDP) of the data.

According to the USB data monitoring apparatus 1 of the invention of the second aspect, the address and end point of the data are included in the condition of the recording object data set in the setting circuit.

The invention of the third aspect is characterized in that: in the USB data monitoring apparatus according to the first aspect, the judgement by the judgement circuit (for example, the ADDR/ENDP judgement circuit 13 shown in Fig. 1) judges whether the data is the recording object data (for example, step S108 shown in Fig. 2), by comparing the address and end point (for example, ADDR/ENDR) of the recording object data which is set in the setting circuit (for example, the ADDR/ENDP setting table circuit shown in Fig. 1) with the address (for example, ADDR) and end point (for example, ENDP) of the data.

According to the USB data monitoring apparatus 1 of the invention of the third aspect, the judgement by the judgement circuit judges whether the data is the recording object data, by comparing the address and end point of the recording object data set in the setting circuit with the address and end point or the data.

Accordingly, according to the invention of the first aspect to the third aspect, according to the address and end point of the recording object data set in the setting circuit, the judgement circuit compares the address and end point of the received data with the address and end point of the recording object data, and only when it is judged that the received data is the recording object data, the received data is recorded in the memory, thereby, only the data which is desired to record, in the data can be recorded in the memory. Accordingly, as the result that many devices are connected on the same bus, even when, many data mixedly exist on the same bus, the data having the specific address and end point can be easily specified, and analyzed.

The invention of the fourth aspect is characterized in that: in the USB data monitoring apparatus according to the fist aspect, in the judgement by the judgement circuit (for example, the ADDR/ENDP judgement circuit 13 shown in Fig. 1), the judgement whether the data is the effective data (for example, step S102, step S104 shown in Fig. 2), and whether the data is the data of the token packet (for example, step S106 shown in Fig. 2) is included.

According to the USB data monitoring apparatus 1 of the invention of the fourth aspect, in the judgement by the judgement circuit, the judgement whether the data is the effective data, and whether the data is the data of the token packet, is included.

Accordingly, according to the invention of the fourth aspect, when the judgement circuit judges whether the received data is the effective data, only when the received data is the effective data, the judgement circuit can conduct the judgement processing of the token packet. Accordingly, also when the received data is not the effective data, the useless processing in such a manner that the judgement processing of the token packet is tried to carry out, can be omitted. Further, when the judgement circuit judges whether the received data is the data of the token packet, only when the received data is the data of the token packet, by conducting the judgement processing whether the received data is the recording object data, the received data can be filtering-processed in a transaction unit.

The invention of the fifth aspect is characterized in that: in the USB data monitoring apparatus according to the first aspect of the invention, according to the judgement result (for example, a coincidence flag in step S109, step S112 shown in Fig. 2) by the judgement circuit (for example, the ADDR/ENDP judgement circuit 13), the control circuit (for example, the memory writing control section 14 shown in Fig. 1) to control the recording to the memory (for example, the memory 15 shown in Fig. 1) of the data is further provided.

According to the USB data monitoring apparatus 1 of the invention of the fifth aspect, according to the judgement result by the judgement circuit, the recording of the data in the memory is controlled by the further provided control circuit.

Accordingly, according to the invention of the fifth aspect, according to the judgement result by the judgement circuit, when the control circuit controls the data to be recorded in the memory, the recording of the data which is not the recording object, in the memory can be prevented. Accordingly, even when the traffic of the data which is not the recording object and recording is not necessary, is very high, and reversely, the traffic of the data which is the recording object and the recording is desired, is very low, the memory is not consumed by the data in which recording is not necessary, and only the specific data can be recorded in the memory, and the analyzing object data can be easily searched and extracted.

### BRIEF DESCRIPTION OF THE DRAWINGS

Fig. 1 is a view showing an internal structure of the USB data monitoring apparatus 1 according to the embodiment of the present invention.
Fig. 2 is a flow chart showing a method by which an ADDR/ENDP judgement circuit 13 judges a token packet, in the USB data monitoring apparatus 1 shown in Fig. 1.
Fig. 3 is a timing chart showing a method by which only a specific data signal is recorded, in the USB data monitoring apparatus 1 shown in Fig. 1.
Fig. 4 is a view showing the internal structure of the USB data monitoring apparatus 2 of the conventional technology.

### DETAILED DESCRIPTION OF THE PREFERRED EMBODIMENTS

Referring to Fig. 1 to Fig. 3, an embodiment of a USB data monitoring apparatus of the present invention will be described below.

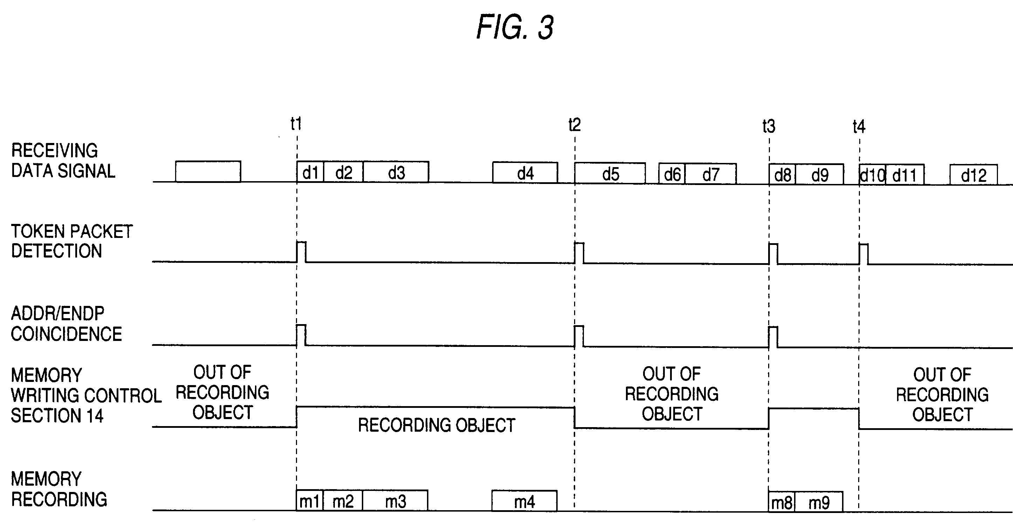

Fig. 1 is a view showing the internal structure of a USB data monitoring apparatus 1 of the present embodiment. Fig. 2 is a flow chart showing a method by which the USB data monitoring apparatus 1 of the present embodiment shown in Fig. 1 judges a token packet of a data signal. Fig. 3 is a timing chart showing a method by which the USB data monitoring apparatus 1 of the present embodiment shown in Fig. 1 monitors the data.

The USB data monitoring apparatus 1 has an ADDR/ENDP setting table circuit 16 to set a recording object data, and an ADDR/ENDP judgement circuit 13 to judge whether the received data is the recording object data. When the SYNC data of the received data signal is a SYNC pattern 80H, and the PID data is the data showing that it is the token packet, the ADDR/ENDP judgement circuit 13 judges whether the ADDR data and the ENDP data of the received data signal coincides with the ADDR/ENDP data of the recording object which is set in the ADDR/ENDP setting table circuit 16. Then, only when the ADDR data and the ENDP data of the received data signal coincides with the ADDR/ENDP data of the recording object, the token packet and the subsequent packets are recorded in the memory 15.

Initially, the structure will be described. Fig. 1 is a view showing the internal structure of the USB data monitoring apparatus 1 in the present embodiment.

In Fig. 1, the USB data monitoring apparatus 1 of the present embodiment is structured by: a phase-locked loop (PLL) circuit 11; code conversion circuit 12; ADDR/ENDP judgement circuit 13; memory writing control section 14; memory 15; ADDR/ENDP setting table circuit 16; and serial buses 17 and 18.

The serial buses 17 and 18 is, in the same manner as in the case of the USB data monitoring apparatus 2 of the conventional technology, a twist pair wire for a pair of inputted data signals. Also in the USB data monitoring apparatus 1 of the present embodiment, a pair of inputted data signals are processed as differential signals.

The phase-locked loop (hereinafter, called PLL) circuit 11 detects the transition of the inputted data signal, and generates a data sampling clock. Also on the USB in the USB data monitoring apparatus of the present embodiment, the clock to conduct the sampling on the inputted data signal is not outputted. Alternatively, the PLL circuit 11 detects the transition of the inputted data signal, and corresponding to the transition, generates the data sampling clock.

The code conversion circuit 12 decodes the NRZI data signal coded by the coding method of NRZI (Non Return to Zero Invert), to the NRZ signal, and outputs it to the ADDR/ENDP judgement circuit 13, which will be described later, and the memory 15. On the USB, the data row of the data signal is finally coded by this NRZI coding method. Accordingly, also art the USB in the USB data monitoring apparatus 1 of the present embodiment, the data row of the data signal is coded by the NRZI coding method. Accordingly, in order to judge the ADDR data and the ENDP data of the inputted data signal by the ADDR/ENDP judgement circuit 13, which will be described later, the coded NRZI data signal is decoded to the NRZ data signal in the code conversion circuit 12.

The ADDR/ENDP judgement circuit 13 compares the ADDR data and ENDP data respectively recorded in the ADDR field and ENDP field in the token packet in the inputted data signal, with the ADDR/ENDP data previously set in the ADDR/ENDP setting table circuit 16, which will be described later. Then, it is judged whether the inputted data signal is the recording object data signal, and the judgement result is outputted to the memory writing control section 14, which will be described later.

The memory writing control section 14 receives the judgement result of the ADDR/ENDP judgement circuit 13, and according to the received judgement result, controls the inputted data signal to be recorded in the memory 15 or not, which will be described later.

The recording of the inputted data signal in the memory is controlled by the memory writing control section 14, and the memory 15 records only the recording object data signal therein.

The ADDR/ENDP setting table circuit 16 records the table for setting the ADDR data and ENDP data respectively recorded in the ADDR field and ENDP field in the token packet of the data signal, in order to designate the data signal which is the recording object to be recorded in the memory 15. Then, in order to apply the judgement reference when it is judged whether the inputted data signal is recorded in the memory, the data of the ADDR/ENDP setting table recorded in the ADDR/ENDP setting table circuit 16 is outputted to the ADDR/ENDP judgement circuit 13.

Next, the operation will be described. Initially, in the operation of the data communication of the USB data monitoring apparatus 1, in order to record a specific data signal in the memory, an outline of the operation to specify the data signal to be the recording object will be described.

Fig. 2 is a flow chart showing a method by which the ADDR/ENDP judgement circuit 13 of the USB data monitoring apparatus 1 shown in Fig. 1 judges the token packet of the inputted data signal.

The data communication on the USB of the USB data monitoring apparatus 1 is conducted by making a transaction as a unit, and the transaction begins from the token packet. The token packet distinguishes a SYNC field packet having a specific synchronization information to synchronize, and is structured by a PID field showing the content of the operation request such as recording, ADDR field to specify the data signal to be the recording object, and ENDP field.

Accordingly, the ADDR/ENDP judgement circuit 13 judges, according to the SYNC field of the received data, whether the data is the effective data, and according to the PID field, conducts the token packet judgement, and determines whether the operation such as the recording, is required, and according to the ADDR and ENDP field, judges whether the data is the transaction data as the recording object.

In the ADDR/ENDP judgement circuit 13 of the USB data monitoring apparatus 1 shown in Fig. 2, initially, the inputted data signal is received (step S101), it is judged whether the received data signal is the idle data (step S102). When the received data signal is the idle data (step S102; True), the data is neglected, and the sequence returns to step S101, and becomes the waiting status of the next packet data signal again.

When the received data signal is not the idle data (step S102; False), the received data is the effective data, and it is recognized that, also on the top of every packet in the data signal, the SYNC data of the SYNC field positively exists. Accordingly, the SYNC data which is the data of the top of the received data signal, is received (step S103), and it is judged whether the SYNC data coincides with the SYNC pattern 80H (step S104).

Then, when the SYNC data of the top of the received data signal does not coincide with the SYNC pattern 80H (step S104; False), it is recognized that the received data signal is a false packet, and this packet is neglected, the sequence returns to step S101, and becomes the waiting status of the next packet data signal again.

On the one hand, when the SYNC data of the top of the received data signal coincides with the SYNC pattern 80H (step S104; True), it is recognized that the received data signal is the effective data, and next to the SYNC field in the data signal, the PID data of the PID field exists. Accordingly, the PID data which is the data next to the SYNC data, is received (step S105), and in order to confirm that the received data signal is the token packet which is the top packet of the transaction, it is judged whether the data coincides with the PID data showing that it is the token packet (step S106).

Next, when the PID data of the received data signal does not coincide with the PID data showing that it is the token packet (step S106; False), it is recognized that the received data signal is not the token packet, but is the data of another packet. Accordingly, it is judged whether the flag showing that the token packet of the top of the transaction coincides with the ADDR/ENDP of the recording object, is set (step S113).

Then, when the flag showing that the token packet of the top of the transaction coincides with the ADDR/ENDP of the recording object, is not set, it is judged as the transaction packet other than the recording object (step S113; False), the sequence returns to step S 101, and comes to the waiting status of the next packet data again. On the other hand, when the flag is set, it is judged as the transaction data of the recording object (step S113; True), and the received data signal is normally data-recorded in the memory 15 (step S114), and the sequence returns to step S101.

On the one hand, when the PID data of the received data signal coincides with the PID data showing that it is the token packet (step S106; True), it is recognized that the ADDR data of the ADDR field and the ENDP data of the ENDP field, showing the recording object, exist next to the PID field in the data signal. Accordingly, the ADDR data and the ENDP data which are the next data to the PID data, are received (step S107), and it is judged whether these data coincide with the ADDR/ENDP data of the recording object recorded in the ADDR/ENDP setting table circuit 6 (step S108).

Then, when the ADDR data and the ENDP data of the received data signal coincide with the ADDR/ENDP data of the recording object (step S108; True), the flag showing the coincidence for the judgement that the subsequent packets other than the token are the transaction packets of the recording object, is set (step S109). Then, the received data signal is normally data-recorded in the memory 15 (step S110), and the flag showing that the token packet arrives at, is set (step S111). The value of the flag showing that the token packet arrives at, which is set in step S111, is outputted to the memory writing control section 14 which controls the recording of the data signal in the memory 15, which will be described later, referring to Fig. 3.

On the one hand, when the ADDR data and the ENDP data of the received data signal does not coincide with the ADDR/ENDP data of the recording object (step S108; False), the flag showing the these coincide with the ADDR/ENDP data, is reset (step S112). Then, the flag showing that the token packet arrives at, is set (step S111). When the flag is set in step S111, the sequence returns to S101, and the data signal is received again, and the processing for the received data signal is started.

Next, the outline of the operation to record the specific data signal in the memory in the operation of the data communication of the USB data monitoring apparatus 1 will be described.

Fig. 3 is a timing chart showing the method to record only the specific data signal in the data signals inputted into the USB data monitoring apparatus 1 shown in Fig. 1.

As shown in Fig. 1, when the data signal inputted into the USB data monitoring apparatus 1 is received by the PLL circuit 11, the PLL circuit 11 outputs the received data signal to the ADDR/ENDP judgement circuit 13 and the memory writing control section 14. Then, the ADDR/ENDP judgement circuit 13 and the memory writing control section 14 respectively receive the outputted data signal.

In Fig. 3, when the ADDR/ENDP judgement circuit 13 detects the token packet in the received data signal, and judges that the ADDR data and the ENDP data in the receive data signal coincide with the ADDR/ENDP data of the recording object recorded in the ADDR/ENDP setting table circuit 16, and the memory writing control circuit 14 receives the judgement result of the ADDR/ENDP judgement circuit 13 (t1 in Fig. 3), the memory writing control section 14 regards the received data signal as the recording object data, and records the data signal in the memory 15.

Accordingly, the data signals d1, d2, d3, and d4 of the recording object in the received data signals are recorded in the memory 15 respectively as m1, m2, m3, and m4.

Further, when the ADDR/ENDP judgement circuit 13 detects the token packet in the received data signals, however, does not judge that the ADDR data and the ENDP data of the received data signals coincide the ADDR/ENDP data of the recording object recorded in the ADDR/ENDP setting table circuit 16, and the memory writing control section 14 receives the judgement result of the ADDR/ENDP judgement circuit 13 (t2 in Fig. 3), the memory writing control section 14 regards the received data signals as the data other than the recording object, and does not record the data signal in the memory 15.

Accordingly, the data signals out of the recording object d5, d6 and d7 in the received data signals are not recorded in the memory 15.

In the same manner, in t3 in Fig. 3, the data signals d8 and d9 of the recording object in the received data signals, are recorded in the memory 15 respectively as m8 and m9. On the one hand, in t4 in Fig. 3, the data signals d10, d11, and d12 out of the recording object in the received data signals are not recorded in the memory 15.

As described above, the USB data monitoring apparatus 1 in the embodiment for which the present invention is applied, has the ADDR/ENDP setting table circuit 16 to set the recording object data, and the ADDR/ENDP judgement circuit 13 to judge whether the received data is the recording object data. When the SYNC data of the received data signal is the SYNC pattern 80H, and the PID data is the data showing that it is the token packet, the ADDR/ENDP judgement circuit 13 judges whether the ADDR data data and the ENDP data of the received data signals coincide with the ADDR/ENDP data of the recording object which is set in the ADDR/ENDP setting table circuit 16.

According to the judgement result of the ADDR/ENDP judgement circuit 13, the memory writing control section 14 records the data signal in the memory 15, only when the ADDR data data and the ENDP data of the received data signals coincide with the ADDR/ENDP data of the recording object.

Accordingly, according to the ADDR/ENDP data of the recording object which is set in the ADDR/ENDP setting table circuit, the ADDR/ENDP judgement circuit compares the ADDR data data and the ENDP data of the received data signals with the ADDR/ENDP data of the recording object, and only when the judgement circuit judges that the received data signals are the recording object data, by recording the received data signals in the memory, only the data desired to be recorded in the data signal can be recorded in the memory. Accordingly, as the result that many devices are connected on the same bus, even when many data mixedly exist on the same bus, the data signal having the specific ADDR data and the ENDP data can be easily specified and analyzed.

Further, when the ADDR/ENDP judgement circuit discriminates whether the received data signal is the effective data, only when the received data signal is the effective data, the judgement processing of the token packet can be carried out. Accordingly, even when the received data signal is not the effective data, the useless processing such that the judgement processing of the token packet is tried to carry out, can be omitted. Further, when the ADDR/ENDP judgement circuit discriminates whether the received data signal is the data of the token packet, only when the received data signal is the data of the token packet, the judgement processing whether it is the recording object data, can be carried out. Accordingly, it becomes possible to communicate the received data signal in a transaction unit.

According to the judgement result by the ADDR/ENDP judgement circuit, when the memory writing control section controls the data signal to be recorded in the memory, it can be prevented that the data signal which is not the recording object, is recorded in the memory. Accordingly, even when the traffic of the data signal which is not the recording object and whose recording is not necessary, is very high, and reversely the traffic of the data signal desired to be recorded, is very low, the memory is not consumed by the data signal whose recording is not necessary, and only the specific data signal can be recorded in the memory, and the analyzing object data can be easily searched and extracted.

Incidentally, the present invention is not limited to the content of the above embodiment, but may be varied within the range which does not depart from the sprit of the present invention. For example, in the ADDR/ENDP setting table circuit, when the ADDR data and ENDP data of the data which is desired to be the recording object, are clearly known, the user may also previously register the specific ADDR data and ENDP data which are desired to be the recording object, and when the ADDR data and ENDP data of the data which is desired to be the recording object, are known to some extent, the user may also previously register the specific ADDR data and ENDP data of the data which are not desired to be the recording object. Further, when the number of the data to be the recording object, is desired to set, the number of the data which is desired to be the recording object, is registered, and according to the registered number of the data, the apparatus side may also automatically determine the recording object data.

Further, in the present embodiment, as the comparison method of the ADDR data and the ENDP data of the data signal with the ADDR/ENDP data of the recording object, by the ADDR/ENDP judgement circuit, various methods can be considered, however, it is not specifically limited in the present embodiment. Further, as the recording medium, the memory is used, however, the hard disk may be used, and when the hard disk is used as the recording medium, the larger amount of data can be recorded.

According to the USB data monitoring apparatus according to the first aspect to the third aspect, according to the ADDR/ENDP data of the recording object, which is set in the ADDR/ENDP setting table circuit, the ADDR/ENDP judgement circuit compares the ADDR data and the ENDP data of the received data signal with the ADDR/ENDP data of the recording object, and only when the received data signal is judged to be the recording object data, it is recorded in the memory, thereby, only the data desired to be recorded, in the data signal can be recorded in the memory. Accordingly, as the result that many devices are connected on the same bus, even when many data mixedly exist on the same bus, the data signal having specific ADDR data and ENDP data can be easily specified, and analyzed.

According to the USB data monitoring apparatus of the invention according to the fourth aspect, when the ADDR/ENDP judgement circuit judges whether the received data signal is the effective data, only when the received data signal is the effective data, the judgement processing of the token packet can be carried out. Accordingly, also when the received data signal is not the effective data, the useless processing such that the judgement processing of the token packet is tried to carry out, can be omitted. Further, when the ADDR/ENDP judgement circuit judges whether the received data signal is the data of the token packet, only when the received data is the token packet data, the judgement processing whether it is the recording object, can be carried out. Accordingly, it becomes possible to communicate the received data signal in a transaction unit.

According to the USB data monitoring apparatus of the invention according to the fifth aspect, according to the judgement result by the ADDR/ENDP judgement circuit, when the memory writing control section controls the data signal to be recorded, it can be prevented that the data signal which is not the recording object, is recorded in the memory. Accordingly, even when the traffic of the data signal which is not the recording object, and whose recording is not necessary, is very high, and reversely the traffic of the data signal which is the recording object, and whose recording is desired, is very low, the memory is not consumed by the data signal whose recording is not necessary, and only the specific data signal is recorded in the memory, and the analyzing object data can be easily searched, and extracted.

## Claims

1. A USB data monitoring apparatus for monitoring the data of a universal serial bus (USB) comprising:
a setting circuit to set conditions of the recording object data; and
according to the conditions of the recording object data set by said setting circuit, a judgement circuit to judge whether the data on the USB is the recording object data, wherein
according to the judgement result by said judgement circuit, only when the data is the recording object data, the data is recorded in a memory.

2. The USB data monitoring apparatus according to Claim 1, wherein,
in the conditions of the recording object data set by said setting circuit, an address and an end point of the data are included.

3. The USB data monitoring apparatus according to Claim 1, wherein
the judgement by said judgement circuit judges whether the data is the recording object data, by comparing the address and the end point of the recording object data which is set in the setting circuit, with the address and the end point of the data.

4. The USB data monitoring apparatus according to Claim 1, wherein
in the judgement by said judgement circuit, the judgement whether the data is the effective data and is the data of a token packet, is included.

5. The USB data monitoring apparatus according to Claim 1, further comprising:
a control circuit to control the recording of the data into said memory, according to the judgement result by said judgement circuit.
